Europäisches Patentamt

European Patent Office

Office européen des brevets

(11) Publication number: **0 478 091 A1**

# EUROPEAN PATENT APPLICATION

(21) Application number: **91202518.6**

(22) Date of filing: **27.09.91**

(51) Int. Cl.5: **F02M 31/12, F02M 53/06**

(30) Priority: **28.09.90 NL 9002129**

(43) Date of publication of application:
**01.04.92 Bulletin 92/14**

(84) Designated Contracting States:
**DE FR GB IT NL**

(71) Applicant: **TEXAS INSTRUMENTS INCORPORATED**
**13500 North Central Expressway**
**Dallas Texas 75265(US)**
(84) **DE FR GB IT**

(71) Applicant: **Texas Instruments Holland B.V.**
**Kolthofsingel 8 Postbox 43**
**NL-7600 AA Almelo(NL)**
(84) **NL**

(72) Inventor: **Von Pickartz, Rikus Z.**
**Fazantstraat 12**
**NL-7622 AL Borne(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Injection internal combustion engine with electrical spark ignition and heating unit.

(57) An injection internal combustion engine with electrical ignition comprises at least one cylinder with a suction line (1, 3), at least one inlet valve (4) fitted in the cylinder head, at least one fuel injector (5), and provided downstream of said injector a heating element (7) with heat sink (8) and one or more PTC-tablets (111, 11b) fitted thereon. The heating element is fitted in such a way through an aperture in the wall of the suction line (1, 3) that the heat sink (8) projects into the suction line (1, 3). The heat sink (8) is formed as a hollow flat metal box and one or more PTC-tablets (11a, 11b). Each tablet is pressed by a spring (12) on one of two opposite-lying inner surfaces of the hollow metal box, which spring (12) is connected to an electrical contact wire (13).

fig-3

The invention relates in the first instance to an injection internal combustion engine with electrical spark ignition, comprising at least one cylinder with a suction line, at least one inlet valve fitting in the cylinder head, at least one fuel injector, and provided downstream of said injector a heating element which is fitted in such a way through an aperture in the wall of the suction line that the heat sink projects into the suction line.

Such an internal combustion engine is known from US-A-3930477.

It has been found that about 50% of the total exhaust gas emission is formed in the short period uring which the engine has not yet reached its operating temperature. Even exhaust gas catalysts, which in normal circumstances reduce the exhaust gas emission by about 90% do not reach this degree of conversion until the operating temperature of the catalyst has been reached. The conversion starts at a temperature of about 300°C, so that after a cold start the exhaust gas emission of the engine is reduced little or not at all in a catalyst. Since the temperature level is not high enough to vaporise the fuel (petrol or alcohol), when the engine is cold an additional quantity of fuel must be added in order to obtain a combustable mixture. This leads to a high exhaust gas emission. When the engine temperature is low, both the fuel consumption and the exhaust gas emission are therefore relatively high. Heating the fuel-air mixture therefore makes a considerable contribution to improving the environment and also achieves an appreciable fuel saving, for little or no additional fuel is injected. The fuel in the case of the internal combustion engine mentioned in the preamble is sprayed onto the heating element which is brought to the desired temperature in a short time, and is thereby brought to the desired temperature. The fuel will consequently vaporise better, and a better mix with the combustion air is also achieved. The heating element is switched off when the engine is warm enough to take over the vaporisation of the fuel.

In the case of the engine known from the above mentioned US-A-3930477 the heating element is a tube in which a resistance wire is fitted. For energising the element is connected through a bi-metal switch to a battery. In connection with the heavy competition between car manufacturers, attention has to be payed not only to a simple mounting and replacing possibility of the heating element, but also to a simple and cheap manufacturing possibility. The heating element disclosed in US-A-3930477 is rather expensive.

The object of the invention is to avoid this disadvantage and provides an engine of the type described in the preamble, in which the heating element can be fitted and replaced easily and can be manufactured in a cheap way.

According to the invention the injection internal combustion engine mentioned in the preamble is to this end characterized in that the heating element comprises a heat sink formed as a hollow flat metal box and one or more PTC-tablets, and that each PTC-tablet is pressed by a spring one one or two opposite-lying inner surfaces of the hollow flat metal box, which spring is connected to an electrical contact wire.

The application of PTC-material in heating elements for heating a fuel-air mixture in a combustion engine is known per sé. FR-A-2567965 discloses an internal combustion engine comprising at least one cylinder with a suction line, at least one inlet valve fitted in the cylinder head, at least one fuel injector and provided downstream of said injector a heating element in the form of a hollow body made of PTC-material or a hollow metal body in which PTC-tablets are embedded. The hollow body projects into the inlet port of the cylinder and is surrounded by an insulating tube. The hollow body as well as the insulating tube are provided with an edge flange which lie in a recess of the cylinder head and is fixed by the fuel inlet pipe. The manufacturing of such a heating element is expensive and the fitting and replacement of the heating element is a time-consuming job. The same disadvantage applies to the engine according to NL-A-8801334, in which the heating element is integrated in a plate which is clamped between the inlet and the head of the cylinder.

Preferably the hollow flat metal box is integral with a connecting piece in which a groove is recessed, and an O-ring is fitted in said groove for sealing relative to the wall bounding the aperture in the suction line.

To give the heating element and advantageous position with respect to the flow direction of the air and the injection direction of the fuel the groove lies in a plane which slants relative to the axis of the heating element.

The invention also relates to a heating element for an injection internal combustion engine and having the above mentioned characteristic features.

The invention will now be explained in greater detail with reference to the figures.

Figure 1 shows a cross-section of a part of an internal combustion engine according to the invention.

Figure 2 shows a top view of the heating element and the partition in the fuel/air mixture port, in which the inner surface of the inlet ports for air and fuel are indicated by a simple line.

Figure 3 shows a heating element in cross-section.

Figure 4 shows the heating element in elevation.

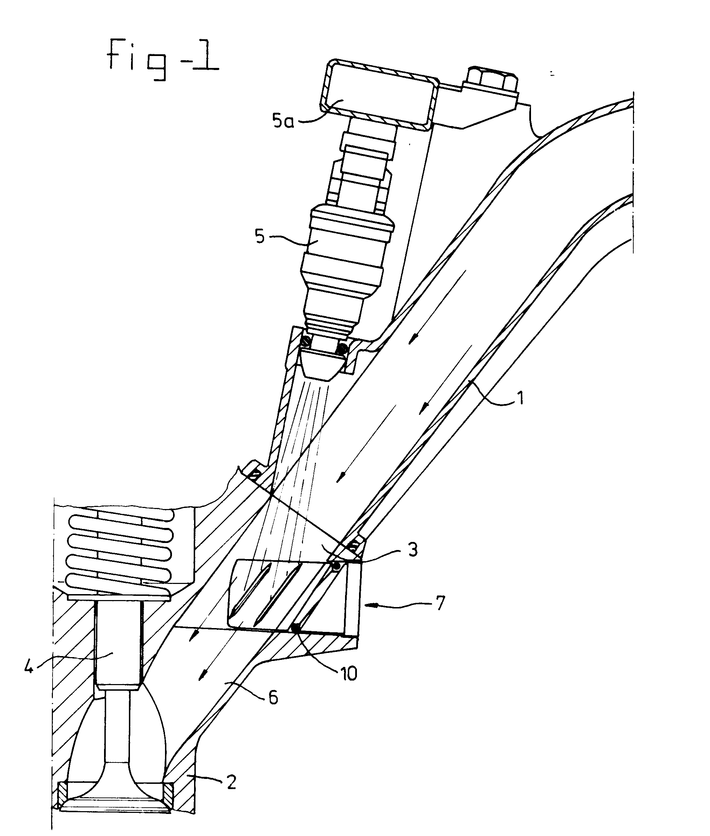

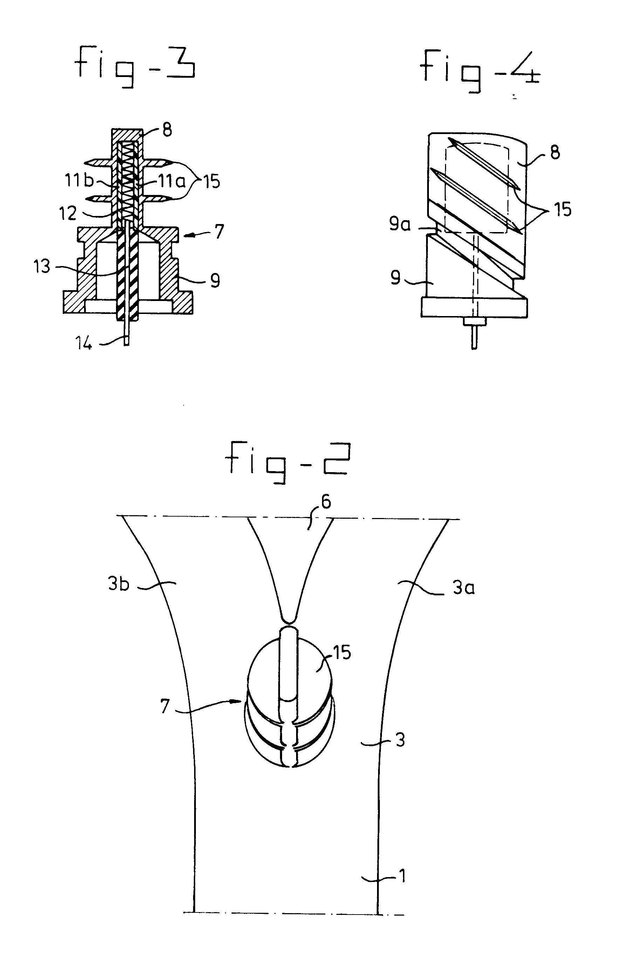

The part of an injection engine shown in Figures 1 and 2 comprises an air inlet port 1 which is fixed in such a way on a cylinder head 2 that it connects to a port 3 for supplying a fuel/air mixture through two inlet valves 4 in the cylinder.

An injector 5 connected to a fuel supply port 5a for the injection of fuel is fixed on the air inlet port 1.

A partition 6 is cast into the port 3 and, as shown in Figure 2, tapers in a wedge shape in the upstream direction, dividing the port 3 into two partial ports 3a, 3b.

In order to raise the fuel to the desired temperature when the engine is cold, it is sprayed onto a heating element 7 during the injection. Said heating element 7 projects through an aperture in the cylinder head into the port 3. It is not out of the question for the heating element 7 to project through an aperture in the air inlet port 2, of course at a place where the injected fuel comes into contact with the element 7.

The heating element 7 comprises a metal heat sink 8 in the form of a hollow flat box which is placed in the profile of the partition 6 just before the upstream end thereof.

The heat sink 8 is integral with a connecting piece 9 which is provided with a groove 9a designed to accommodate an O-ring 10 for sealing the connecting piece relative to the wall of the cylinder head aperture through which the heating element is placed. Placed opposite each other in the cavity of the heat sink 8 are two tablets 11a, 11b made from a material with a positive temperature coefficient (PTC), which tablets are pressed by a spring 12 on the wall of the cavity.

The spring 12 is connected to an electrical current wire 13 which is fixed on a connecting pin 14. It will be clear that by supplying electrical current to the spring 12 the PTC tablets are heated, and with increasing temperature the resistance of the PTC material increases and the temperature cannot rise above a specific maximum. Two slanting fins 15 are cast on the outside of the flat heat sink box and, as shown in Figure 1, when the heating element is fitted run parallel to the direction of air flow indicated by arrows. The supply direction of the injected fuel is, however, so slanted relative to the fins 15 that the fuel is sprayed on the fins. This ensures that the heat transfer from the heat sink to the fuel takes place very efficiently without the resistance relative to the air stream increasing to an appreciable extent.

Additional advantages of the design described are that the heating element is simple and cheap to make and is extremely simple to fit and replace.

Various variants are possible within the scope of the invention. The invention can also be applied to an engine with one inlet valve per cylinder, but is particularly advantageous with an engine with two inlet valves per cylinder.

## Claims

1. Injection internal combustion engine with electrical spark ignition, comprising at least one cylinder with a suction line (1, 3), at least one inlet valve (4) fitting in the cylinder head, at least one fuel injector (5), and provided downstream of said injector a heating element (7) which is fitted in such a way through an aperture in the wall of the suction line (1, 3) that the heat sink (8) projects into the suction line (1, 3), characterized in that the heating element (7) comprises a heat sink (8) formed as a hollow flat metal box and one or more PTC-tablets (11a, 11b), and that each PTC-tablet is pressed by a spring (12) on one of two opposite-lying inner surfaces of the hollow flat metal box, which spring (12) is connected to an electrical contact wire (13).

2. Internal combustion engine according to claim 1, characterized in that the hollow flat metal box is integral with a connecting piece (9) in which a groove (9a) is recessed, and an O-ring (10) is fitted in said groove for sealing relative to the wall bounding the aperture in the suction line (1, 3).

3. Internal combustion engine according to claim 2, characterized in that the groove (9a) lies in a plane which slants relative to the axis of the heating element (8).

4. Heating element for an injection internal combustion engine characterized in that the heating element (7) comprises a heat sink (8) formed as a hollow flat metal box and one or more PTC-tablets (11a, 11b), and that each PTC-tablet is pressed by a spring (12) on one of two opposite-lying inner surfaces of the hollow flat metal box, which spring (12) is connected to an electrical contact wire (13).

5. Heating element according to claim 4, characterized in that the hollow flat metal box is integral with a connecting piece (9) in which a groove (9a) is recessed for taking up a O-ring (10)

6. Heating element according to claim 5, characterized in that the groove (9a) lies in a plane which slants relative to the axis of the heating element (8).

Fig -1

# Fig-3

8

11b    11a    15

12

7

13

9

14

# Fig-4

8

15

9a

9

# Fig-2

6

3b    3a

15

7

3

1

European
Patent Office

EUROPEAN SEARCH
REPORT

Application Number

EP 91 20 2518

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-3 930 477  (JORDAN)<br>* column 2, line 9-44; figure 1 * * <br>– – – | 1,4 | F 02 M 31/12<br>F 02 M 53/06 |
| A | GB-A-1 337 672  (JORDAN)<br>* page 3, line 13 - line 25 * * * page 3, line 115 - line 122 * * * figures 6,7 * *<br>– – – | 1,4 | |
| A | EP-A-0 247 697  (TEXAS INSTRUMENTS HOLLAND B.V.)<br>* The whole document * *<br>– – – – – | 1,4 | |

TECHNICAL FIELDS
SEARCHED (Int. Cl.5)

F 02 M
F 02 N

The present search report has been drawn up for all claims

| Place of search | Date of completion of search | Examiner |
|---|---|---|
| The Hague | 04 December 91 | KLINGER T.G. |